# EUROPEAN PATENT SPECIFICATION

(11) **EP 1 138 443 B1**
(45) Date of publication and mention of the grant of the patent: **18.12.2002**
(21) Application number: 00830245.7
(22) Date of filing: 31.03.2000
(51) Int. Cl.: B25B 27/00, F16J 15/32

(54) **A device for automatically introducing gaskets inside grooved seats of bell-mouths of thermoplastic pipes**
Vorrichtung zum automatisierten Einbau von Dichtungen in Nutaufnahmen von Muffen an thermoplastischen Kunststoffrohren
Dispositif pour introduire automatiquement des joints d'étanchéité dans des logements rainurés de tulipes de tuyaux en matériau thermoplastique

(43) Date of publication of application: 04.10.2001
(73) Proprietor: SICA S.p.A., 48011 Alfonsine (RA) (IT)
(72) Inventor: Allegri, Giovanni, 48011 Alfonsine (RA) (IT)
(74) Representative: Lanzoni, Luciano

(56) References cited:
- DE-A- 4 110 866
- DE-B- 1 478 798
- DE-C- 4 100 045
- US-A- 3 851 369
- US-A- 4 845 822

## Description

The present invention relates to a device for automatically introducing gaskets made of rubber or elastomeric material inside grooved seats of bell-mouths of thermoplastic pipes.

To manufacture fluid conveying pipelines, thermoplastic pipes are frequently used, assembled, one after the other, in correspondence with their bell-mouth shaped extremities and internally provided with grooved seats containing sealing gaskets for the conveyed fluid. Such gaskets, which have a characteristic annular shape, are inserted into the pipe using devices which operate exploiting the elasticity of the material constituting the gasket and which substantially perform:
- a phase of elastic compression of the gasket, imparting it an annularly reduced configuration;
- a phase whereby the annularly reduced gasket is introduced into the bell-mouth;
- a phase whereby the gasket is released, after its correct positioning relative to the grooved seat, with the consequent re-expansion and permanent insertion of the gasket into the bell-mouth.

Devices for automatically introducing gaskets made of rubber or elastomeric material into grooved seats of thermoplastic bell-mouths are known, in which a guide element has a hole with cone frustum longitudinal section, whose inlet has its diameter corresponding to the diameter of a non-deformed gasket and whose outlet has its diameter corresponding to the nominal diameter of a bell-mouth. The bell-mouth is positioned facing the outlet of the hole, whilst a non-deformed gasket is coaxially located at the inlet of the hole. A thruster made in a single body, which moves along the longitudinal axis of the hole, frontally strikes the gasket by means of the free ends of tines generally distributed on a circumference corresponding to the ring of the non-deformed gasket. The gasket is thus thrust into the hole and forced, by the shape of the hole, to diminish its own diameter becoming deformed. The tines have a variable geometry, which allows them to approach their own free ends to the axis of the hole as the section of the hole itself decreases in diameter, sliding on the walls of the hole without stopping. In this way, the tines continue to thrust the gasket inside the hole, following the deformation of the gasket itself. To obtain this effect in a simple manner, the tines are generally made of a relatively flexible material. This allows them to return to the original shape when the thruster is extracted from the hole. The length of the tines covers both the entire length of the hole and the additional segment necessary to thrust the gasket inside the grooved seat destined to house it.

In the moment in which the gasket is released inside the grooved seat, a drift whose diameter corresponds to the nominal diameter of the bell-mouth, associated to the thruster, is located coaxially to the bell-mouth downstream of the grooved seat itself, to prevent the gasket to be expelled in the direction of the pipe by effect of the elastic return.

The devices for automatically introducing gaskets made of rubber or elastomeric material inside grooved seats of bell-mouths of thermoplastic pipes, as described above, present some drawbacks.

In particular, the tines are structurally weakened by the fact that they have to be flexible in order to allow the variation of the geometry of the thruster head according to the diameter of the section of the hole through which the gasket is thrust. The tines themselves are subjected to fatigue and to rapid wear by the forced motion performed inside the hole during the numberless productive cycles of the device, requiring frequent checks and maintenance.

The aim of the present invention is to overcome the drawbacks lamented above, making available a device for automatically introducing gaskets made of rubber or elastomeric material inside grooved seats of bell-mouths of thermoplastic pipes, which allows the use of tines with fixed geometry, which can be made of rigid material and, hence, are stronger and less subject to wear problems or maintenance.

This aim and others besides, which shall become more readily apparent in the course of the description that follows, are reached, in accordance with the present invention by a device for automatically introducing gaskets made of rubber or elastomeric material inside grooved seats of bell-mouths of thermoplastic pipes as described in the accompanying claims.

The invention is described more in detail below with the aid of drawings, which show an embodiment provided purely by way of non limiting example.
- Figures 1 to 3 show, with some parts visible and others not shown for the sake of greater clarity, an axial longitudinal section of a first embodiment of the device of the present invention, in some initial phases of the cycle for inserting a gasket;
- Figures 4 to 7 show, with some parts visible and others not shown for the sake of greater clarity, an axial longitudinal section of the device of the present invention, in subsequent phases of the cycle for inserting a gasket;
- Figure 8 shows a front view of a thruster comprised in the device of the present invention, with the planes of section A-A corresponding to Figures 1 through 7 indicated;
- Figure 9 shows a front view of a guide element comprised in the device of the present invention, with the planes of section A-A corresponding to Figures 1 through 7 indicated;
- Figures 10 to 12 show, with some parts visible and others not shown for the sake of greater clarity, an axial longitudinal section, in the planes A-A indicated in Figures 8 and 9, of a second embodiment of the device of the present invention, in some initial phases of the cycle for inserting a gasket;
- Figure 13 shows, with some parts visible and others in axial longitudinal section in the planes indicated as A-A in Figures 8 and 9, a lateral view of the device of the present invention, with the evidence of an embodiment of means for actuating the thruster.

With reference to the figures, the number 1 indicates a device for automatically introducing gaskets made of rubber or elastomeric material inside grooved seats of bell-mouths of thermoplastic pipes. It comprises a guide element 2, which has a hole 21 with cone frustum longitudinal section. The hole 21 has an inlet 22 whose diameter corresponds to the nominal diameter of a gasket 3 in the non deformed state and an outlet 23 whose diameter corresponds to the nominal diameter of a bell-mouth 4 of a thermoplastic pipe 5.

The bell-mouth 4 is positioned coaxially to the hole 21 with its own extremity 41 oriented towards the outlet 23 of the hole 21 and is provided, between said extremity 41 and the pipe 5, with a grooved seat 42 whose diameter is greater than the nominal diameter of the bell-mouth 4 itself, to receive the gasket 3.

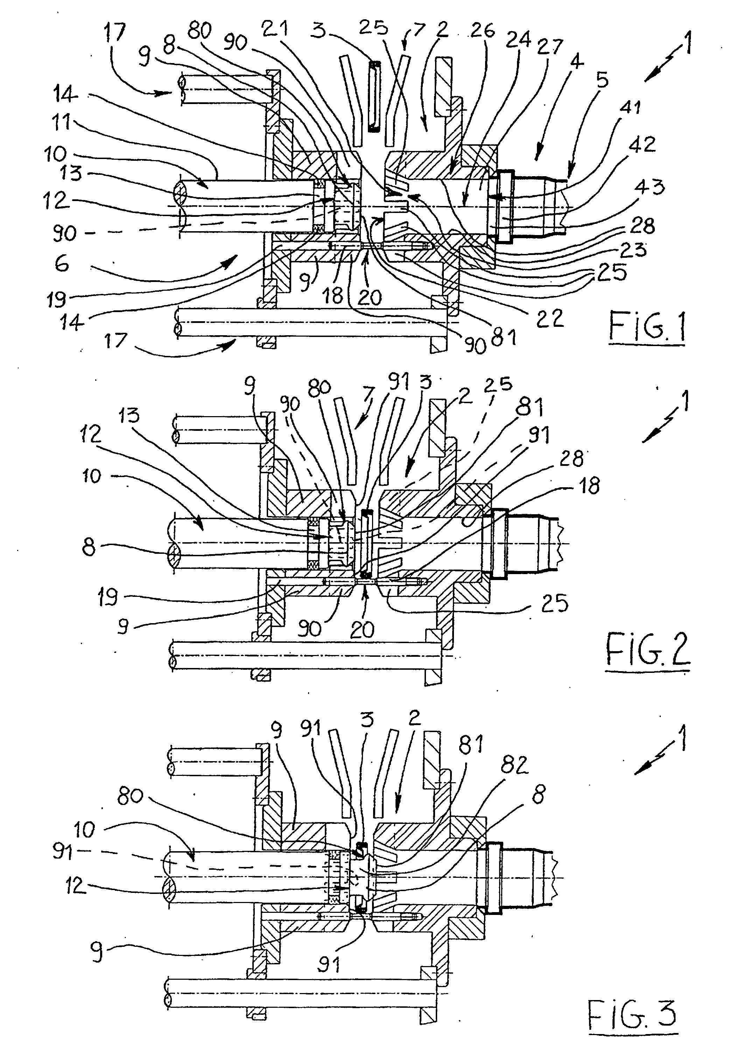

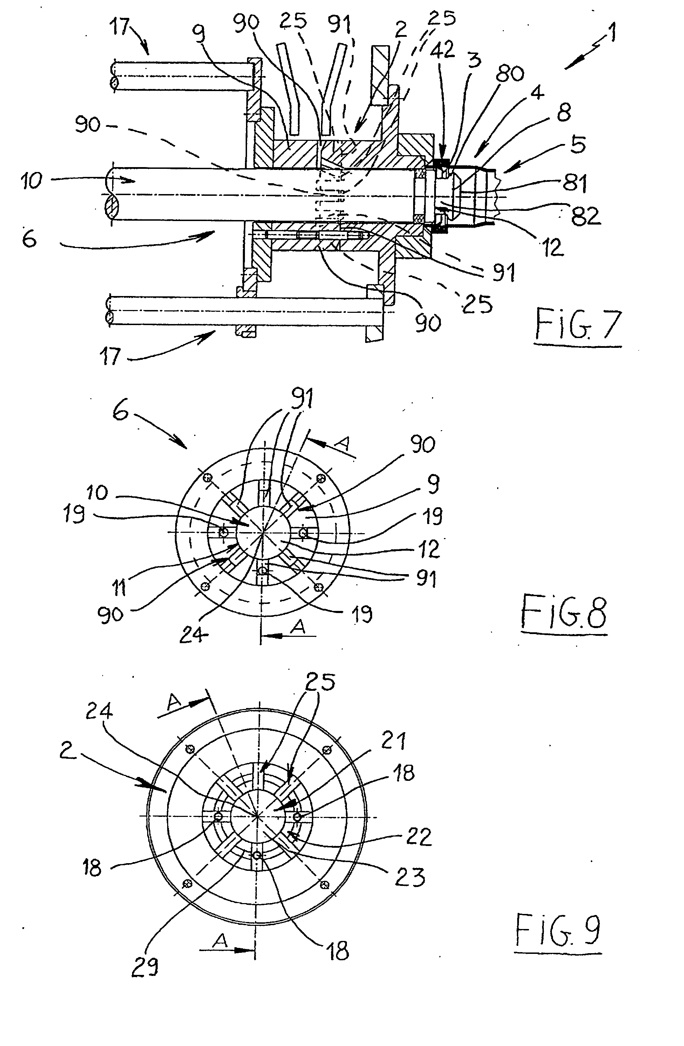

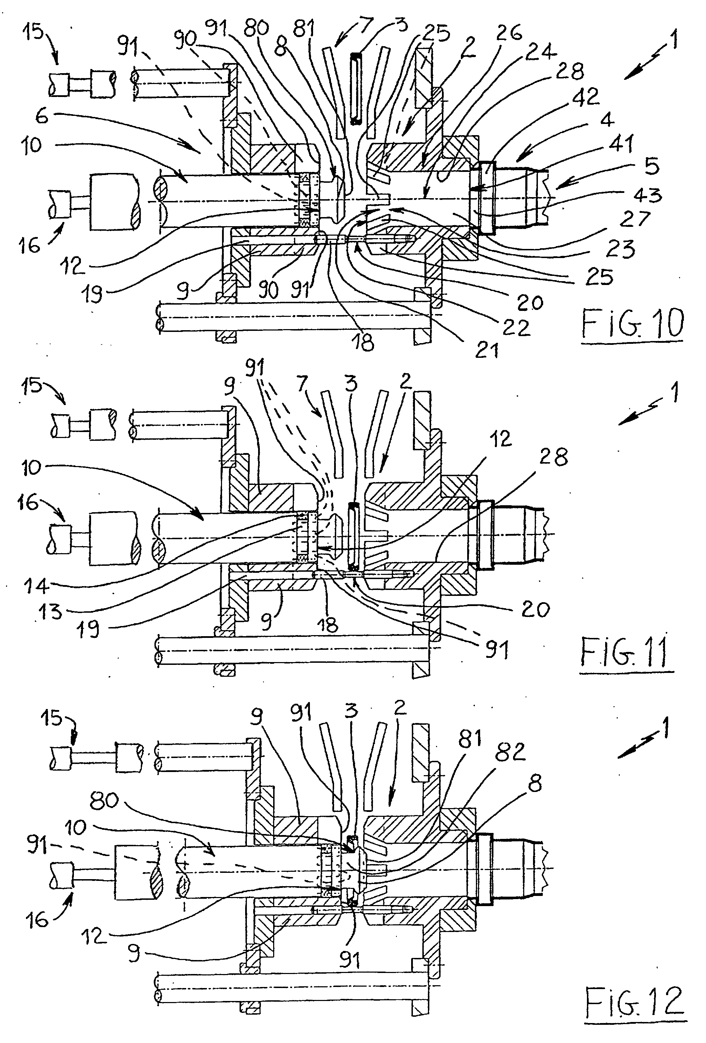

A thruster 6 is movable relative to the guide element 2 along a longitudinal axis 24 of the hole 21. The motion of the thruster 6 alternates between an initial configuration in which the thruster 6 is at a predetermined distance from the inlet 22 of the hole 21, to allow the placement of the gasket 3 in position in front of the hole 21, and a final configuration corresponding to the correct positioning of the gasket 3 in the grooved seat 42. Figure 1 and Figure 10 show the initial configuration of the motion of the thruster 6, respectively in a first and in a second embodiment of the present invention. Figure 7 shows the final configuration of the motion of the thruster 6, applicable for both aforementioned embodiments.

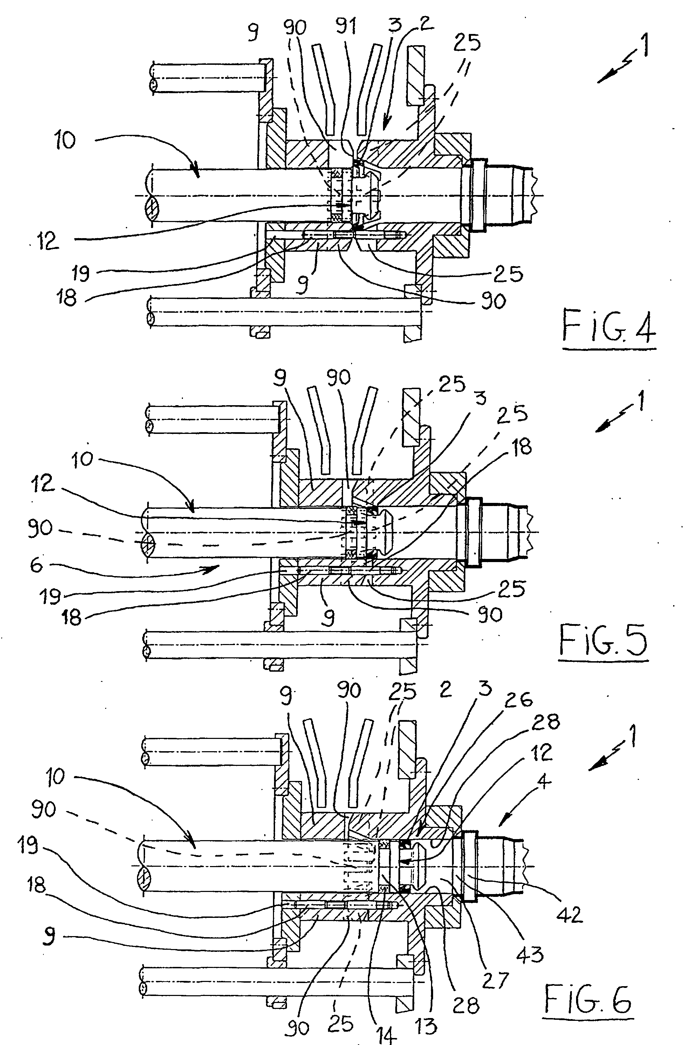

The motion of the thruster 6 also passes at least through a first intermediate configuration, shown in Figure 4, in which the thruster 6 frontally thrusts the gasket 3 inside the hole 21 and at least through a second intermediate configuration subsequent to the first, shown in Figure 5, in which the thruster 6 places the gasket 3 in correspondence with the outlet 23 of the hole 21. The guide element 2 and the thruster 6 thus co-operate in reducing the diameter of the gasket 3 to the nominal diameter of the bell-mouth 4.

In particular, as shown in the figures, the thruster 6 comprises at least an exterior part 9 and an interior part 10 able to slide in guided fashion relative to one another along the longitudinal axis 24 of the hole 21 of the guide element 2. The interior part 10 has its cross section of a diameter corresponding to the nominal diameter of the bell-mouth 4 and is coaxial to the hole 21. In the embodiment shown in the figures, the exterior part 9 presents a through cylindrical cavity, inside which slides the cylindrical body of the interior part 10.

The exterior part 9 of the thruster 6 frontally presents a plurality of tines 90 with fixed geometry. Said tines 90 are, thus, made of substantially rigid material and do not change shape during the cycles of the device 1. They stretch towards the hole 21 of the guide element 2 and define a frontal check surface 91 for the gasket 3. The tines 90 are homogeneously distributed around the interior part 10 of the thruster 6. They extend, from the lateral surface 11 of said interior part 10, at least to a distance from the longitudinal axis 24 of the hole 21 corresponding to the diameter of the gasket 3 in the non-deformed state. In the embodiment shown in Figure 8, they develop along extensions of the diameters of the cross section of the interior part 10. The tines (90) could, nonetheless, be obtained in any convenient direction of lay and geometric shape which, in front view, were to extend, from the lateral surface 11 of the interior part 10, at least to a distance from the longitudinal axis 24 of the hole 21 corresponding to the diameter of the gasket 3 in the non deformed state. In this way, the gasket 3 slides with continuity on the check surface 91 as it is deformed by the combined action of the thruster 6 and of the reduction in the diameter of the hole 21 of the guide element 2.

The tines 9 are, moreover, able to be inserted in corresponding seats 25 obtained in the guide element 2 along the directrices of the hole 21 itself. The seats 25 extend longitudinally for the entire cone frustum shaped longitudinal section of the hole 21 and transversely at least partially in the guide element 2 exteriorly to the hole 21. Figures 8 and 9 clearly show the correspondence between the tines 90 and the seats 25.

The thruster 6, therefore, passes from the initial configuration to the second intermediate configuration through the motion of the exterior and interior parts 9, 10 and through the co-penetration of the exterior part 9 of the thruster 6 into the guide element 2 thanks to the free transit of the tines 90 in the seats 25, as shown in Figures 4 and 5. The gasket 3, positioned forward of the hole 21, is checked by means of the check surface 91 defined by the tines 90 and thrust inside the hole 21 until it is placed in correspondence with the outlet 23. The guide element 2 and the exterior part 9 thus co-operate in reducing the diameter of the gasket 3 to the nominal diameter of the bell-mouth 4.

Advantageously, as shown in Figure 9, in a preferred embodiment of the invention, the seats 25 are through transversely to the longitudinal axis 24 of the hole 21 to reduce the size of the guide element 2.

Conveniently, the segment of the seat 25 corresponding to the outlet 23 of the hole 21 is shaped in such a way as to allow to recover the parts of the gasket 3 that are inserted into the seats 25 as a result of the deformation undergone by the gasket 3 itself in its transit along the hole 21. This can be obtained, for instance, with appropriate invitations, chamfers or radii.

The interior part 10 of the thruster 6 has an anterior extremity 12 for frontally checking the gasket 3 with its diameter corresponding to the nominal diameter of the bell-mouth 4. Said interior part 10 is alternatively movable, relative to the exterior part 9 of the thruster 6, at least from a first position in which the anterior checking extremity 12 is aligned with the frontal checking surface 91 defined by the tines 90, to a second position, corresponding to the final configuration of the thruster 6, in which the anterior checking extremity 12 is advanced relative to the frontal checking surface 91 and substantially adjacent to the grooved seat 42.

The first position of the interior part 10 relative to the exterior part 9 is shown in general in Figures 3, 4 and 5 and, with particular reference to a second embodiment of the invention, in Figures 10 through 12. In this first relative position, maintained by moving simultaneously and with the same speed the exterior and interior parts 9, 10 of the thruster 6, the checking surface 91 defined by the tines 90 and the anterior checking extremity 12 determine a continuous checking plane for the gasket 3. This allows to reduce the diameter of the gasket 3 without hindrance to the nominal diameter of the bell-mouth 4 and the frontal check of the gasket 3 by the anterior checking extremity 12 in correspondence with the outlet 23 of the hole 21.

At this point, stopping the exterior part 9 relative to the guide element and moving only the interior part 10, the gasket is thrust by the anterior extremity 12 inside the bell-mouth and the second position of the interior part 10 relative to the exterior part 9, shown in Figure 7, is thus achieved. This enables the proper placement of the gasket 3 in the grooved seat 42.

Advantageously, at least the exterior part 9 of the thruster 6 and the guide element 2 are made of self-lubricating plastic material. In this way, the need to lubricate the parts that slide one inside the other during the operation of the device 1 is reduced. Moreover, the movable parts of the device 1 itself are considerably lightened.

In order to maintain, during the motion of the exterior part 9 of the thruster 6, the tines 90 and the seats 25 in mutual correspondence, as well as the interior part 10 of the thruster 6 coaxial with the hole 21 of the guide element 2, guides 17 are provided for the translatory motion of the exterior and interior parts 9, 10 of the magnetic thruster 6 relative to the guide element 2.

When the thruster 6 is in the final configuration, a drift 8 whose diameter corresponds to the nominal diameter of the bell-mouth 4 can be placed coaxially to the bell-mouth 4 between the grooved seat 42 and the pipe 5 to prevent the expulsion of the gasket 3 from the grooved seat 42 in the direction of the pipe 5 by effect of the elastic return of the gasket 3 itself. In particular, the drift 8 is rigidly coaxially connected to the interior part 10 of the thruster 6 and has its first side 80 oriented towards the interior part 10 and situated at a distance from the anterior checking extremity 12 at least corresponding to the length of the grooved seat 42, to allow the positioning of the drift 8 between the grooved seat 42 and the pipe 5 when the thruster 6 is in the final configuration.

Conveniently, the rigid connection between the drift 8 and the interior part 10 of the thruster 6 is obtained by means of a substantially cylindrical body 82, developing from the anterior checking extremity 12 to the first side 80 of the drift 8. Said body 82 has a lesser diameter than the nominal diameter of the bell-mouth, of predetermined value so that, as shown in Figures 5 and 6, the gasket 3 can lie on the body 82 itself when the diameter of the gasket 3, in the deformed state induced by the passage inside the hole 21, approximates the nominal diameter of the bell-mouth 4.

During the motion of the interior part 10 of the thruster 6 relative to the exterior part 9, the drift 8, as shown in Figures 3 and 12 enters the ring constituted by the gasket 3, going beyond the gasket 3 itself. In this way the drift 8 prevents also any elastic return of the gasket 3 during the deformation inside the hole 21 of the guide element 2.

Advantageously, the guide element 2 provides a projection 26 from the outlet 23 of the hole 21 towards the bell-mouth 4. Said projection 26 has an extension 27 of the hole 21, coaxial with the hole 21 itself and having cylindrical longitudinal section whose diameter corresponds to the nominal diameter of the bell-mouth 4. As shown in Figure 6, the transit of the gasket 3 inside the extension 27 of the hole 21, forced by the motion of the interior part 10 relative to the exterior part 9 of the thruster 6 by means of the anterior checking extremity 12, favours the return into the cross section of the bell-mouth 4 of all those parts of the gasket 3 that are inserted in the seats 5 following the deformation undergone by the gasket 3 itself in transiting along the hole 21. Once again, to favour this recovery, advantageously, the segment of the seats 25 corresponding to the outlet 23 of the hole 21 is appropriately shaped, for instance, with suitable invitations, chamfers or radii and can extend also for a short segment within the extension 27 of the hole 21.

The transit of the gasket 3 inside the extension 27 of the hole 21 also favours the homogenisation of the state of deformation of the gasket 3 itself before its insertion in the grooved seat 42 of the bell-mouth 4.

In the absence of the extension 27, these tasks would be entrusted only to the possible short segment 43 of bell-mouth 4 that precedes the grooved seat 42.

Advantageously, in the presence of the projection 26, the interior part 10 of the thruster 6 provides a circumferential groove 13 situated at a predetermined distance from the anterior checking extremity 12. Said circumferential groove 13 is able to contain a lubricant and to house a felt ring 14. In this way, as shown in particular in Figure 6, during the motion of the interior part 10 of the thruster 6 in the guide element 2 the cleaning and lubrication of the walls 28 of the extension 27 of the hole 21 is obtained.

Conveniently, means can be provided for taking the lubricant to the groove 13 and to the felt ring 14. Said means, being known to the person versed in the art, are not shown in the figures.

As shown for a first embodiment of the invention in Figures 1 and 2 and for a second embodiment of the invention in Figures 10 and 11, a feeding station 7, in the figures exemplified and schematically represented by a hopper, places the gasket 3 in front of and coaxially to the hole 21. Means are provided for keeping the gasket 3 in position.

Advantageously, as shown in Figures 1 through 10 and, in particular, in Figures 8 and 9, the means for maintaining in position the gasket 3 in front of and coaxially to the hole 21 comprise at least two bars 18 parallel to each other and to the longitudinal axis 24 of the hole 21. Said bars 18 are positioned in correspondence with an edge 29 of the inlet 22 of the hole 21, rigidly connected to the guide element 2 and able to be inserted in appropriate axial seats 19 obtained on the thruster 6, in order not to hamper the co-penetration of the exterior part 9 of the thruster 6 into the guide element 2. If the gasket 3 falls by gravity from the feeding station 7, it is convenient to position the bars 18 in correspondence with the part of the edge 29 that is opposite to the station 7 itself, thereby allowing the bearing of the gasket 3.

In the particular embodiment shown in Figures 8 and 9, the bars 18 are three. Two of them are positioned in correspondence with the extremities of the horizontal diameter of said edge 29, whilst the third one is positioned in correspondence with the point of the edge 29 situated on the vertical and opposite to the feeding station 7. Moreover, also in Figures 8 and 9, in the particular embodiment shown, the axial seats 19 are obtained in correspondence with some of the tines 29, whilst the bars 18 are located in the seats 25 corresponding to said tines.

Obviously, symmetrically, the bars 18 could be rigidly connected to the thruster 6 and able to be inserted in appropriate axial seats obtained on the guide element 2.

Advantageously, moreover, the bars 18 present shaped grooves 20 to favour the stable housing of the gasket 3 in front of and coaxially to the hole 21.

In a preferred embodiment of the invention, whose operating phases are shown in Figures 1 to 7, in the initial configuration of the motion of the thruster 6, a second side 81 of the drift 8 opposite to the first side 80 is aligned with the checking surface 91 defined by the tines 90 of the exterior part 9. It is thereby possible to minimise the size of the device 1, keeping at a close distance the thruster 6 and the guide element 2, while allowing the feeding station 7 to place the gasket 3 in front of the hole 21. Moreover, the second side 81 of the drift 8 and the checking surface 91 offer, together with the part of the guide element 2 oriented towards the thruster 6, an invitation and a support to the gasket 3 which favours its retention in a position coaxial to the hole 21.

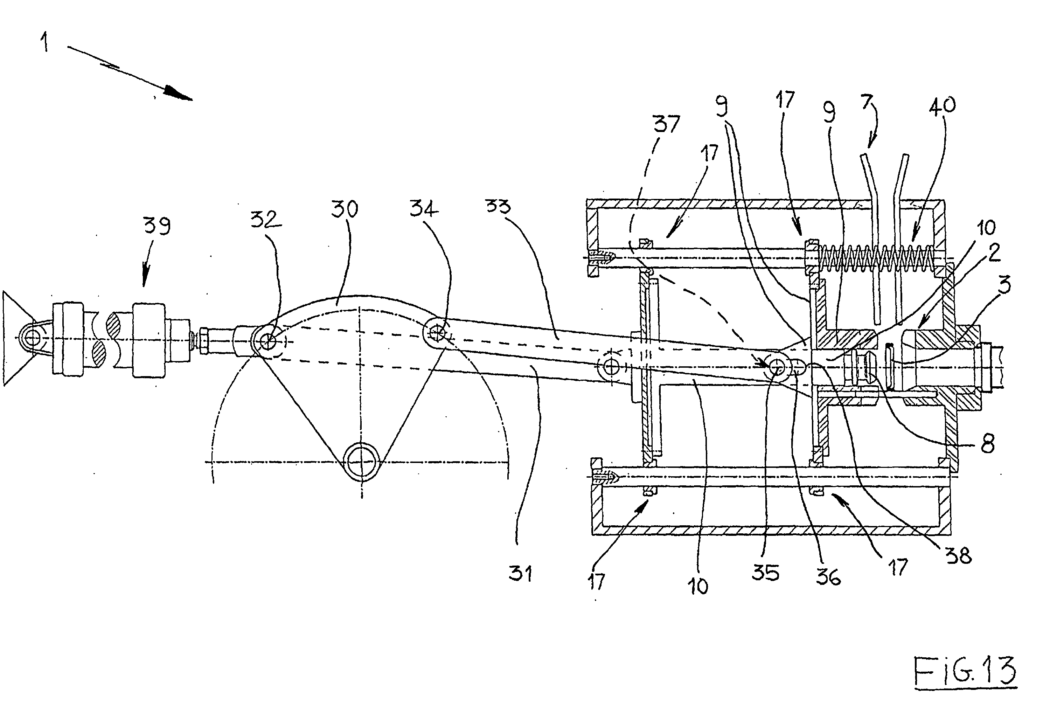

Means are provided for moving the thruster 6 relative to the guide element 2. Figure 13 shows a sample embodiment of such means within the preferred embodiment of the invention shown in Figures 1 through 7.

In particular, advantageously, the means for moving the thruster 6 relative to the guide element 2 comprise at least an oscillating cam 30, at least a first connecting rod 31 and at least a second connecting rod 33. The first connecting rod 31 has its own head associated to the cam 30 by means of a first hinge 32 and its own foot hinged to the interior part 10 of the thruster 6. The second connecting rod 33 has its own head associated to the cam 30 by means of a second hinge 34 and its own foot associated to the exterior part 9 of the thruster 6 by means of a third hinge 35.

The first and the second hinge 32, 34 are rigidly distanced from each other in a fixed manner, whilst the third hinge 35 is movable in a slot 36 obtained on the exterior part 9 of the thruster 6.

This arrangement synchronises the relative motion of the interior part 10 and of the exterior part 9. The initial configuration of the motion of the thruster 6, shown in Figures 1 and 2, corresponds to a stroke start position 37 of the third hinge 35 in the slot 36. The thruster 6 moves, during an initial segment of the outward run of the oscillating motion of the cam 30, from said initial configuration to the second intermediate configuration, shown in Figure 5, through a first succession of transitory configurations schematically shown in Figures 2 to 5. In these transitory configuration, initially, the third hinge 35 of the second connecting rod 33 moves freely inside the slot 36, keeping the exterior part 9 motionless relative to the guide element 2. Simultaneously, the first connecting rod 31 thrusts the interior part 10 towards the guide element 2 until, when the third hinge 35 of the second connecting rod 33 reaches an end of stroke position 38 in the slot 36, the drift 8, as shown in Figure 3, moves beyond the gasket 3 and the anterior extremity 12 of the interior part 10 aligns itself with the checking surface 91 defined by the tines 90 of the exterior part 9. Subsequently, in the transitory configurations between those shown in Figures 3 and 4, the first and the second connecting rods 31, 33 simultaneously and harmoniously thrust the interior part 10 and the exterior part 9 towards the guide element 2, the checking surface 91 frontally checking the gasket 3. An additional advance of the oscillation of the cam 30 brings the checking surface 91 defined by the tines 90 in correspondence with the outlet 23 of the hole 21, to determine the second intermediate configuration of the motion of the thruster 6, shown in Figure 5. In correspondence with the second intermediate configuration, the second connecting rod 33 reaches the end of its thrust stroke on the exterior part 9 of the thruster 6. During a final segment of the outward run of the oscillating motion of the cam 30, the thruster 6 also moves from said second intermediate configuration of its motion, through a second succession of transitory configurations shown schematically in Figures 5 to 7. In these transitory configurations, the third hinge 35 of the second connecting rod 33 initially moves freely backwards inside the slot 6 maintaining the exterior part 9 motionless relative to the guide element 2. Simultaneously, the first connecting rod 31 thrusts the interior part 10 towards the grooved seat 42 until placing the gasket 3 in the grooved seat 42. During this motion of the first connecting rod 31, it may also occur that the second connecting rod 33 partially extracts the exterior part 9 of the thruster from the guide element 3. Subsequently, the thruster 6 passes from the final configuration to the initial configuration during the return of the oscillating motion of the cam 30.

The oscillation of the oscillating cam 30, as shown in Figure 13, can advantageously be obtained by means of at least a simple-thrust actuator 39, operatively associated to elastic return means 40. Alternatively, the actuator 39 can be an alternating actuator, rendering superfluous, in this case, the presence of elastic return means 40. In particular, the actuator 39 can be a simple-thrust or alternating fluid-dynamic jack.

With reference to Figures 10 through 12 and to Figures 4 through 7, in a second embodiment of the invention, as shown in particular in Figures 10 and 11, in the initial configuration of the motion of the thruster 6, the anterior extremity 12 of the interior part 10 of the thruster 6 itself is aligned with the checking surface 91 defined by the tines 90 of the exterior part 9.

In this case, clearly, the drift 8 projects from the interior part 10 in the direction of the guide element 2. Conveniently, the thruster 6 is in a backward position, thereby allowing the feeding station 7 correctly to position the gasket 3 in front of and coaxially to the hole 21. As shown in the Figures, the thruster 6 moves from the initial configuration to the second intermediate configuration by means of the simultaneous and harmonious motion of both the exterior and the interior parts 9, 10 and, hence, subsequently, from the second intermediate configuration to the final configuration, solely by means of the motion of the interior part 10 relative to the exterior part 9.

Advantageously, in this embodiment, the means for moving the thruster 6 relative to the guide element 2 comprise at least a first actuator 15 of the motion of the exterior part 9 of the thruster 6 itself and at least a second actuator 16 of the motion of the interior part 10 of the thruster 6, said first and second actuator 15,16 being mutually independent. In particular, thanks to the succession of phases of the motion of the thruster 6, it is thus possible to have strokes of predetermined length for said first and second actuator 15, 16. The use is thereby avoided of position measuring devices combined with microswitches or of similar complicated systems for controlling the relative motions of the exterior and interior parts 9, 10 of the thruster 6.

The first and the second actuator 15, 16 can be alternating fluid-dynamic jacks. Preferably, the first and the second actuator 15, 16 are simple-thrust fluid-dynamic jacks, operatively associated to elastic return or contrast means.

With reference to the preferred embodiment of the invention, shown in Figures 1 through 7, the operation of the device 1 is as follows.

As shown in Figures 1 and 2, the feeding station 7 places the gasket 3 in front of and coaxially to the hole 21, bearing on the bars 18 in correspondence with the shaped grooves 20. With reference to Figures 2 and 3, initially, by means of the motion only of the interior part 10 of the thruster 6, the drift 8 exits the cylindrical cavity of the exterior part 9, enters the ring constituted by the gasket 3 and moves beyond the gasket 3 itself. At this point, the anterior extremity 12 of the interior part 10 is aligned with the frontal checking surface 91 defined by the tines 90. The part 9 then starts to move simultaneously and harmoniously with the exterior part 10. The gasket 3 is checked by the checking surface 91 and, as shown in Figure 4, thrust through the inlet 22 of the hole 21. With reference to Figures 4 through 7, by means of the co-penetration of the exterior part 9 of the thruster 6 in the guide element 2 thanks to the free transit of the tines 90 in the seats 25, the gasket 3 is thrust inside the hole 21. The diameter of the gasket 3 is thus reduced to the value of the nominal diameter of the bell-mouth, when the gasket 3 itself is placed in correspondence with the outlet 23 of the hole 21. In this configuration, the anterior checking extremity 12 starts to check the deformed gasket 3. The exterior part 9 of the thruster 6 stops and only the interior part 10 proceeds, thrusting the gasket 3 until placing it inside the grooved seat 42 of the bell-mouth 4.

With reference to the second embodiment of the invention, shown in Figures 10 through 12, as well as Figures 4 through 7, the operation of the device 1 is as follows.

As shown in Figures 10 and 11, the feeding station 7 places the gasket 3 in front of and coaxially to the hole 21, bearing on the bars 18 in correspondence with the shaped grooves 20. At this point, the anterior extremity 12 of the interior part 10 is aligned with the frontal checking surface 91 defined by the tines 90. Initially, as shown in Figures 11 and 12, by means of the simultaneous and harmonious motion of the exterior part and of the interior part 9, 10 of the thruster 6, the drift 8 enters the ring constituted by the gasket 3 and moves beyond the gasket 3 itself. The gasket 3 is checked by the checking surface 91 and, as shown in Figure 4, thrust through the inlet 22 of the hole 21. With reference to Figures 4 through 7, from this moment on, the behaviour of the device 1 is exactly identical to that described for the preferred embodiment of the invention.

The invention achieves important advantages.

First of all, it allows to use a system that is substantially rigid, thus strong and hardly subject to wear and maintenance.

In the second place, within this context, it allows the use of simple kinematic patterns and avoids the use of complicated systems for controlling the relative positioning of the parts.

The invention thus conceived can be subject to numerous modifications and variations, without thereby departing from the scope of the inventive concept.

Moreover, all components can be replaced by technically equivalent elements.

In practice all materials employed, as well as the dimensions, can be any, according to requirements.

## Claims

1. A device (1) for automatically introducing gaskets made of rubber or elastomeric material inside grooved seats of bell-mouths of thermoplastic pipes comprising:
- a guide element (2) which has a hole (21) with cone frustum shaped longitudinal section, the hole (21) having an inlet (22) whose diameter corresponds to the nominal diameter of a gasket (3) in the non-deformed state and an outlet (23) whose diameter corresponds to the nominal diameter of a bell-mouth (4) of a thermoplastic pipe (5), the bell-mouth (4) being positioned coaxially to the hole (21) with its own extremity (41) oriented towards the outlet (23) of the hole (21) and provided, between said extremity (41) and the pipe (5), with a grooved seat (42) whose diameter is greater than the nominal diameter of the bell-mouth (4) itself to receive the gasket (3);
- a thruster (6) movable relative to the guide element (2) along a longitudinal axis (24) of the hole (21), the motion of the thruster (6) being alternated between an initial configuration in which the thruster (6) is at a predetermined distance from the inlet (22) of the hole (21) to allow the placement of the gasket (3) in position in front of the hole (21), and a final configuration corresponding to the correct positioning of the gasket (3) in the grooved seat (42), the motion of the thruster (6) passing, moreover, at least through a first intermediate configuration in which the thruster frontally thrusts the gasket (3) inside the hole (21) and at least for a second intermediate configuration subsequent to the first in which the thruster (6) positions the gasket (3) in correspondence with the outlet (23) of the hole (21), the guide element (2) and the thruster (6) co-operating in reducing the diameter of the gasket (3) to the nominal diameter of the bell-mouth (4);
- means for moving the thruster (6) relative to the guide element (2);
- a feeding station (7) for placing the gasket (3) in front of and coaxially to the hole (21) and means for maintaining the gasket (3) in position;
- a drift (8) whose diameter corresponds to the nominal diameter of the bell-mouth (4), able to be placed coaxially to the bell-mouth (4) between the. grooved seat (42) and the pipe (5) when the thruster (6) is in the final configuration, to prevent the expulsion of the gasket (3) from the grooved seat (42) in the direction of the pipe (5) by effect of the elastic return of the gasket (3) itself;
**characterised in that**:
- the thruster (6) comprises at least an exterior part (9) and an interior part (10) able to slide in guided fashion relative to one another along the longitudinal axis (24) of the hole (21) of the guide element (2), the interior part (10) having cross section whose diameter corresponds to the nominal diameter of the bell-mouth (4) and being coaxial to the hole (21);
- the exterior part (9) of the thruster (6) frontally presents a plurality of tines (90) with fixed geometry defining a frontal checking surface (91) for the gasket (3), said tines (90) being stretched towards the hole (21) of the guide element (2), distributed homogeneously around the interior part (10) of the thruster (6), extended from the lateral surface (11) of said interior part (10) at least to a distance from the longitudinal axis (24) of the hole (21) corresponding to the diameter of the gasket (3) in the non-deformed state, the tines (90) also being able to be inserted in correspondent seats (25) obtained in the guide element (2) along the directrices of the hole (21) itself, the seats (25) being extended longitudinally for the entire cone frustum shaped longitudinal section of the hole (21) and transversely at least partially in the guide element (2) to the exterior of the hole (21), the thruster (6) passing from the initial configuration to the second intermediate configuration by means of the motion of the exterior and interior part (9, 10) and by means of the co-penetration of the exterior part (9) of the thruster (6) in the guide element (2) thanks to the free transit of the tines (90) in the seats (25), the guide element (2) and the exterior part (9) co-operating in the reduction of the diameter of the gasket (3) to the nominal diameter of the bell-mouth (4);
- the interior part (10) of the thruster (6) presents an anterior extremity (12) for frontally checking the gasket (3) whose diameter corresponds to the nominal diameter of the bell-mouth (4) and is alternatively movable, relative to the exterior part (9) of the thruster (6), at least from a first position in which the anterior checking extremity (12) is aligned with the frontal checking surface (91) defined by the tines (90), to a second position, corresponding to the final configuration of the thruster (6), in which the anterior checking extremity (12) is advanced relative to the frontal checking surface (91) and substantially adjacent to the grooved seat (42), to allow without hindrance the reduction of the diameter of the gasket (3) to the nominal diameter of the bell-mouth (4) and the frontal checking of the gasket (3) to the anterior checking extremity (12) in correspondence with the outlet (23) of the hole (21), and to allow the correct positioning of the gasket (3) in the grooved seat (42) itself;
- the drift (8) is rigidly coaxially connected to the interior part (10) of the thruster (6) and has a first side (80) oriented towards the interior part (10) and located at a distance from the anterior checking extremity (12) corresponding at least to the length of the grooved seat (42), to allow the positioning of the drift (8) between the grooved seat (42) and the pipe (5) when the thruster (6) is in the final configuration.

2. A device as claimed in claim 1, **characterised in that** the seats (25) obtained in the guide element (2) are through transversely to the longitudinal axis (24) of the hole (21).

3. A device as claimed in claim or 2, **characterised in that** the guide element (2) comprises a projection (26) from the outlet (23) of the hole (21) towards the bell-mouth (4), said projection (26) presenting an extension (27) of the hole (21) coaxial with the hole (21) itself and having longitudinal cylindrical section whose diameter corresponds to the nominal diameter of the bell-mouth (4), to favour the return of all the parts of the gasket (3) inside the dimension of the cross section of the bell-mouth (4) and to homogenise the state of deformation of the gasket (3) itself.

4. A device as claimed in claim 3, **characterised in that** the interior part (10) of the thruster (6) comprises a circumferential groove (13) situated at a predetermined distance from the anterior checking extremity (12) and able to contain a lubricant and to house a felt ring (14), for the cleaning and lubrication of the walls (28) of the extension (27) of the hole (21) during the motion of the interior part (10) of the thruster (6) in the guide element (2).

5. A device as claimed in any of the claims from 1 through 4, **characterised in that**, in the initial configuration of the motion of the thruster (6), the anterior extremity (12) of the interior part (10) of the thruster (6) itself is aligned with the checking surface (91) defined by the tines (90) of the exterior part (9).

6. A device as claimed in any of the claims from 1 through 4, **characterised in that**, in the initial configuration of the motion of the thruster (6), a second side (81) of the drift (8) opposite to the first side (80) is aligned with the checking surface (91) defined by the tines (90) of the exterior part (9).

7. A device as claimed in claim 5, **characterised in that** the means for moving the thruster (6) relative to the guide element (2) comprise at least a first actuator (15) of the motion of the exterior part (9) of the thruster (6) itself and at least a second actuator (16) of the motion of the interior part (10) of the thruster (6), said first and second actuator (15,16) being mutually independent.

8. A device as claimed in claim 6, **characterised in that** the means for moving the thruster (6) relative to the guide element (2) comprise:
- at least an oscillating cam (30);
- at least a first connecting rod (31) having its own head associated to the cam (30) by means of a first hinge (32) and its own foot hinged to the interior part (10) of the thruster (6);
- at least a second connecting rod (33) having its own head associated to the cam (30) by means of a second hinge (34) and its own foot associated to the exterior part (9) of the thruster (6) by means of a third hinge (35);
the first and the second hinge (32,34) being rigidly distanced from each other in a fixed manner, the third hinge (35) being movable in a slot (36) obtained on the exterior part (9) of the thruster (6), to synchronise the relative motion of the interior part (10) and of the exterior part (9), the initial configuration of the motion of the thruster (6) corresponding to a stroke start position (37) of the third hinge (35) in the slot (36), the thruster (6) passing, during an initial segment of the outward run of the oscillating motion of the cam (30) from said initial configuration to the second intermediate configuration through a first succession of transitory configurations in which: initially, the third hinge (35) of the second connecting rod (33) moves freely inside the slot (6) keeping motionless the exterior part (9) relative to the guide element (2); simultaneously, the first connecting rod (31) thrusts the interior part (10) towards the guide element (2) until, when the third hinge (35) of the second connecting rod (33) reaches an end of stroke position (38) in the slot (36), the drift (8) moves beyond the gasket (3) and the anterior extremity (12) of the interior part (10) aligns itself with the checking surface (91) defined by the tines (90) of the exterior part (9); subsequently, the first and the second connecting rod (31,33) thrust simultaneously and harmoniously the interior part (10) and the exterior part (9) towards the guide element (2), the checking surface (91) checking frontally and placing the gasket (3) in correspondence with the outlet (23) of the hole (21), the second connecting rod (33) reaching the end of its own thrust stroke on the exterior part (9) of the thruster (6); the thruster (6) passing, moreover, during a final segment of the outward run of the oscillating motion of the cam (30), from said second intermediate configuration to the final configuration through a second succession of transitory configurations in which: the third hinge (35) of the second connecting rod (33) initialy moves freely backwards inside the slot (6) maintaining the exterior part (9) motionless relative to the guide element (2); simultaneously, the first connecting rod (31) thrusts the interior part (10) towards the grooved seat (42) until it places the gasket (3) in the grooved seat (42); the thruster 6 passing, moreover, from the final configuration to the initial configuration during the return of the oscillating motion of the cam (30).

9. A device as claimed in claim 8, **characterised in that** the oscillation of the oscillating cam (30) is obtained by means of at least a simple-thrust actuator (39) operatively associated to elastic return means (40).

10. A device as claimed in any of the previous claims, **characterised in that** the means for maintaining in position the gasket (3) in front of and coaxially to the hole (21) comprise at least two bars (18) parallel to each other and to the longitudinal axis (24) of the hole (21), located in correspondence with an edge (29) of the inlet (22) of the hole (21), rigidly connected to the guide element (2) and able to be inserted in appropriate axial seats (19) obtained on the thruster (6) in order not to hamper the co-penetration of the exterior part 9 of the thruster 6 in the guide element 2.

11. A device as claimed in claim 10, **characterised in that** the bars (18) present shaped grooves (20) to favour the stable housing of the gasket (3) in front of and coaxially to the hole (21).

12. A device as claimed in any of the previous claims, **characterised in that** at least the exterior part (9) of the thruster (6) and the guide element (2) are made of a self-lubricating plastic material.

## Patentansprüche

1. Vorrichtung zum automatischen Einbau von Dichtungen aus Gummi oder Elastomermaterial in Nutaufnahmen von Muffen an thermoplastischen Kunststoffrohren, enthaltend:
- ein Führungselement (2), welches eine Bohrung (21) von stumpfkegelförmigem Längsschnitt hat, wobei die Bohrung (21) einen Einlass (22) aufweist, dessen Durchmesser dem Nenndurchmesser einer Dichtung (3) im nicht verformten Zustand entspricht, und einen Auslass (23), dessen Durchmesser dem Nenndurchmesser einer Muffe (4) eines Kunststoffrohres (5) entspricht, wobei die Muffe (4) koaxial zu der Bohrung (21) angeordnet ist, und zwar mit ihrem eigenen Ende (41) dem Auslass (23) der Bohrung (21) zugewandt und zwischen dem genannten Ende (41) und dem Rohr (5) mit einer Nutaufnahme (42) versehen ist, deren Durchmesser grösser ist als der Nenndurchmesser der Muffe (4) selbst, um die Dichtung (3) aufzunehmen;
- ein Schubelement (6), das im Verhältnis zu dem Führungselement (2) entlang einer Längsachse (24) der Bohrung (21) beweglich ist, wobei die Bewegung des Schubelementes (6) wechselweise erfolgt, und zwar zwischen einer Ausgangsposition, in welcher das Schubelement (6) sich in einem bestimmten Abstand von dem Einlass (22) der Bohrung (21) befindet, um das Anordnen der Dichtung (3) in der Position gegenüber der Bohrung (21) zu erlauben, und einer Endposition, welche der korrekten Positionierung der Dichtung (3) in der Nutaufnahme (42) entspricht, wobei die Bewegung des Schubelementes (6) durch eine erste Zwischenposition verläuft, in welcher das Schubelement frontal die Dichtung (3) in das Innere der Bohrung (21) schiebt, und wenigstens durch eine zweite Zwischenposition im Anschluss an die erste, in welcher das Schubelement (6) die Dichtung (3) an dem Auslass (23) der Bohrung (21) positioniert, wobei das Führungselement (2) und das Schubelement (6) zwecks Reduzierung des Durchmessers der Dichtung (3) bis auf den Nenndurchmesser der Muffe (4) zusammenarbeiten;
- Mittel zum Bewegen des Schubelementes (6) im Verhältnis zu dem Führungselement (2);
- eine Zuführstation (7) zum Anordnen der Dichtung (3) gegenüber und koaxial zu der Bohrung (21) sowie Mittel zum Halten der Dichtung (3) in Position;
- einen Dorn (8), dessen Durchmesser dem Nenndurchmesser der Muffe (4) entspricht, und der koaxial zu der Muffe (4) zwischen der Nutaufnahme (42) und dem Rohr (5) angeordnet werden kann, wenn sich das Schubelement (6) in der Endposition befindet, um das Herausdrücken der Dichtung (3) aus der Nutaufnahme (42) in Richtung des Rohres (5) durch die Wirkung des elastischen Rücklaufs der Dichtung (3) selbst zu verhindern;
**dadurch gekennzeichnet, dass**
- das Schubelement (6) wenigstens einen äusseren Teil (9) und einen inneren Teil (10) aufweist, in der Lage, auf geführte Weise zueinander entlang der Längsachse (24) der Bohrung (21) des Führungselementes (2) zu gleiten, wobei der innere Teil (10) einen Querschnitt hat, dessen Durchmesser dem Nenndurchmesser der Muffe (4) entspricht und er koaxial zu der Bohrung (21) ist;
- der äussere Teil des Schubelementes (6) frontal eine Anzahl von Zinken (90) von fester Geometrie aufweist, die eine frontale Anschlagfläche (91) für die Dichtung (3) beschreiben, wobei die genannten Zinken (90) in Richtung der Bohrung (21) des Führungselementes (2) gestreckt sind, gleichmässig verteilt um den inneren Teil (10) des Schubelementes (6) und von der seitlichen Oberfläche (11) des inneren Teils (10) ausgedehnt bis auf wenigstens einen Abstand von der Längsachse (24) der Bohrung (21) entsprechend dem Durchmesser der Dichtung (3) im nicht verformten Zustand, wobei die Zinken (90) ebenfalls in der Lage sind, in entsprechende Sitze (25) eingeschoben zu werden, die in dem Führungselement (2) entlang den Leitlinien der Bohrung (21) selbst erhalten sind, wobei sich die Sitze (25) in Längsrichtung über den gesamten stumpfkegelförmigen Längsabschnitt der Bohrung (21) erstrecken und quer wenigstens zum Teil in das Führungselement (2) nach ausserhalb der Bohrung (21), wobei das Schubelement (6) von der Ausgangsposition in die zweite Zwischenposition mit Hilfe der Verschiebung des äusseren und inneren Teils (9, 10) übergeht sowie mit Hilfe des Eindringens mit dem äusseren Teil (9) des Schubelementes (6) in das Führungselement (2), dank des freien Durchlaufs der Zinken (90) in den Sitzen (25), und wobei der äussere Teil (9) bei der Reduzierung des Durchmessers der Dichtung (3) bis auf den Nenndurchmesser der Muffe (4) mitarbeitet;
- der innere Teil (10) des Schubelementes (6) ein vorderes Ende (12) für den frontalen Anschlag an die Dichtung (3) aufweist, dessen Durchmesser dem Nenndurchmesser der Muffe (4) entspricht, und er wechselweise im Verhältnis zu dem äusseren Teil (9) des Schubelementes (6) beweglich ist, und zwar aus wenigstens einer ersten Position, in welcher das vordere Anschlagende (12) zu der vorderen, durch die Zinken (90) beschriebenen Anschlagfläche ausgerichtet ist, in eine zweite Position, die der Endposition des Schubelementes (6) entspricht, in welcher das vordere Anschlagende (12) im Verhältnis zu der Anschlagfläche (91) vorgeschoben ist und im wesentlichen an die Nutaufnahme (42) angrenzt, um ohne Behinderung die Reduzierung des Durchmessers der Dichtung (3) bis auf den Nenndurchmesser der Muffe (4) zu erlauben sowie den frontalen Anschlag der Dichtung (3) an dem vorderen Anschlagende (12) an dem Auslass (23) der Bohrung (21), und um die korrekte Positionierung der Dichtung (3) in der Nutaufnahme (42) selbst zu erlauben;
- der Dorn (8) starr und koaxial an den inneren Teil (10) des Schubelementes (6) angeschlossen ist und eine erste, zu dem inneren Teil (10) orientierte Seite (80) aufweist sowie in einem Abstand von dem vorderen Anschlagende (12) angeordnet ist, welcher wenigstens der Länge der Nutaufnahme (42) entspricht, um die Positionierung des Dorns (8) zwischen der Nutaufnahme (42) und dem Rohr (5) zu erlauben, wenn sich das Schubelement (6) in der Endposition befindet.

2. Vorrichtung nach Patentanspruch 1, **dadurch gekennzeichnet, dass** die in dem Führungselement (2) erhaltenen Sitze (25) quer zu der Längsachse (24) der Bohrung (21) durchgehend sind.

3. Vorrichtung nach Patentanspruch 1 oder 2, **dadurch gekennzeichnet, dass** das Führungselement (2) einen Ansatz (26) an dem Auslass (23) der Bohrung (21) in Richtung der Muffe (4) enthält, wobei der genannte Ansatz (26) koaxial mit der Bohrung (21) selbst eine Verlängerung (27) der Bohrung (21) bildet und einen verlängerten zylindrischen Abschnitt hat, dessen Durchmesser dem Nenndurchmesser der Muffe (4) entspricht, um die Rückkehr aller Teile der Dichtung (3) innerhalb der Abmessung des Querschnitts der Muffe (4) zu begünstigen und den Zustand der Verformung der Dichtung (3) selbst gleichmässig zu gestalten.

4. Vorrichtung nach Patentanspruch 3, **dadurch gekennzeichnet, dass** der innere Teil (10) des Schubelementes (6) eine umlaufende Rille (13) enthält, angeordnet in einem bestimmten Abstand von dem vorderen Anschlagende (12) und in der Lage, ein Schmiermittel zu enthalten und einen Filzring (14) aufzunehmen, und zwar zum Reinigen und Schmieren der Wände (28) der Verlängerung (27) der Bohrung (21) während der Bewegung des inneren Teils (10) des Schubelementes (6) in dem Führungselement (2).

5. Vorrichtung nach einem beliebigen der Patentansprüche von 1 bis 4, **dadurch gekennzeichnet, dass** in der anfänglichen Darstellung der Bewegung des Schubelementes (6) das vordere Ende (12) des inneren Teils (10) des Schubelementes (6) selbst zu der Anschlagfläche (91) ausgerichtet ist, welche durch die Zinken (90) des äusseren Teils (9) beschrieben wird.

6. Vorrichtung nach einem beliebigen der vorstehenden Patentansprüche, **dadurch gekennzeichnet, dass** in der anfänglichen Darstellung der Bewegung des Schubelementes (6) eine zweite Seite (81) des Dornes (8), entgegengesetzt zu der ersten Seite (80), zu der durch die Zinken (90) des äusseren Teils (9) beschriebenen Anschlagfläche (91) ausgerichtet ist.

7. Vorrichtung nach Patentanspruch 5, **dadurch gekennzeichnet, dass** die Mittel zum Bewegen des Schubelementes (6) im Verhältnis zu dem Führungselement (2) wenigstens einen ersten Trieb (15) für die Bewegung des äusseren Teils (9) des Schubelementes (6) selbst und wenigstens einen zweiten Trieb (16) für die Bewegung des inneren Teils (10) des Schubelementes (6) enthalten, wobei die genannten ersten und zweiten Triebe (15, 16) voneinander unabhängig sind.

8. Vorrichtung nach Patentanspruch 6, **dadurch gekennzeichnet, dass** die Mittel zum Bewegen des Schubelementes (6) im Verhältnis zu dem Führungselement (2) wie folgt enthalten:
- eine Schwingnocke (30);
- wenigstens eine erste Verbindungsstange (31), deren eigener Kopf der Nocke (30) mit Hilfe eines ersten Gelenkes (32) zugeordnet und deren eigener Fuss an den inneren Teil (10) des Schubelementes (6) angelenkt ist;
- wenigstens eine zweite Verbindungsstange (33), deren eigener Kopf der Nocke (30) mit Hilfe eines zweiten Gelenkes (34) zugeordnet und deren eigener Fuss dem äusseren Teil (9) des Schubelementes (6) mit Hilfe eines dritten Gelenkes (35) zugeordnet ist;
wobei die ersten und zweiten Gelenke (32, 34) starr und auf feste Weise voneinander abstehend sind und das dritte Gelenk (35) in einem in den äusseren Teil (9) des Schubelementes (6) eingearbeiteten Schlitz (36) beweglich ist, um die jeweiligen Bewegungen des inneren Teils (10) und des äusseren Teils (9) zu synchronisieren, wobei die Ausgangsposition der Bewegung des Schubelementes (6) einer anfänglichen Hubposition (37) des dritten Gelenkes (35) in dem Schlitz (36) entspricht und das Schubelement (6) während einer ersten Strecke der Bewegung der Nocke (30) nach aussen aus der genannten Ausgangsposition in die zweite Zwischenposition übergeht, und zwar durch eine erste Folge von Übergangspositionen, in welchen: sich anfangs das erste Gelenk (35) der zweiten Verbindungsstange (33) frei in dem Schlitz (6) bewegt und dabei den äusseren Teil (9) bewegungslos im Verhältnis zu dem Führungselement (2) hält; gleichzeitig die erste Verbindungsstange (31) den inneren Teil (10) in Richtung des Führungselementes (2) schiebt, bis sich, wenn das dritte Gelenk (35) der zweiten Verbindungsstange (33) ein Ende der Hubposition (38) in dem Schlitz (36) erreicht, der Dorn (8) hinter der Dichtung (3) verschiebt und das vordere Ende (12) des inneren Teils (10) sich selbst zu der durch die Zinken (90) des äusseren Teils (9) beschriebenen Anschlagfläche (91) ausrichtet; anschliessend schieben die ersten und zweiten Verbindungsstangen (31, 33) gleichzeitig und übereinstimmend des inneren Teil (10) und den äusseren Teil (9) in Richtung des Führungselementes (2), wobei die Anschlagfläche (91) frontal auftrifft und die Dichtung (3) an dem Auslass (23) der Bohrung (21) positioniert und die zweite Verbindungsstange (33) das Ende ihres eigenen Schubhubes an dem äusseren Teil (9) des Schubelementes (6) erreicht; wobei das Schubelement (6) ausserdem während einer letzten Strecke der Schwingbewegung der Nocke (30) nach aussen aus der genannten zweiten Zwischenposition in die Endposition übergeht, und zwar durch eine zweite Folge von Übergangspositionen, in welchen: sich das dritte Gelenk (35) der zweiten Verbindungsstange (33) in dem Schlitz (6) anfangs frei zurück bewegt, wobei es den äusseren Teil (9) im Verhältnis zu dem Führungselement (2) bewegungslos hält; gleichzeitig die erste Verbindungsstange (31) den inneren Teil (10) in Richtung der Nutaufnahme (42) schiebt, bis die Dichtung (3) in die Nutaufnahme (42) eingesetzt wird; wobei das Schubelement (6) ausserdem während der zurückkehrenden Schwingbewegung der Nocke (30) aus der Endposition in die Ausgangsposition zurückgeht.

9. Vorrichtung nach Patentanspruch 8, **dadurch gekennzeichnet, dass** die Schwingbewegung der Schwingnocke (30) mit Hilfe eines Triebes (39) mit Einfachschub erhalten ist, der im Betrieb mit elastischen Rückholmitteln (40) verbunden ist.

10. Vorrichtung nach einem beliebigen der vorstehenden Patentansprüche, **dadurch gekennzeichnet, dass** die Mittel zum Halten in Position der Dichtung (3) frontal und koaxial zu der Bohrung (21) wenigstens zwei parallel zueinander und zu der Längsachse (24) der Bohrung (21) verlaufende Stangen (18) enthalten, die entsprechend zu einem Rand (29) des Einlasses (22) der Bohrung (21) angeordnet sind, starr an das Führungselement (2) angeschlossen und in der Lage, in geeignete axiale Sitze (19) eingeschoben zu werden, die sich an dem Schubelement (6) befinden, um nicht das Eindringen des äusseren Teils (9) des Schubelementes (6) in das Führungselement (2) zu behindern.

11. Vorrichtung nach Patentanspruch 10, **dadurch gekennzeichnet, dass** die Stangen (18) geformte Nutungen (20) aufweisen, um ein stabiles Einsetzen der Dichtung (3) frontal und koaxial zu der Bohrung (21) zu begünstigen.

12. Vorrichtung nach einem beliebigen der vorstehenden Patentansprüche, **dadurch gekennzeichnet, dass** wenigstens der äussere Teil (9) des Schubelementes (6) und das Führungselement (2) aus selbstschmierendem Kunststoffmaterial hergestellt sind.

## Revendications

1. Un dispositif (1) pour introduire automatiquement des joints en caoutchouc ou matériau élastomère dans des logements rainurés de tulipes de tuyaux en matériau thermoplastique, comprenant:
- un élément guide (2) présentant un orifice (21) de section longitudinale en tronc de cône, l'orifice (21) ayant une entrée (22), dont le diamètre correspond au diamètre nominal d'un joint (3) à l'état non déformé, et une sortie (23), dont le diamètre correspond au diamètre nominal d'une tulipe (4) d'un tuyau en matériau plastique (5), la tulipe (4) étant positionnée coaxialement à l'orifice (21) avec sa propre extrémité (41) orientée vers la sortie (23) de l'orifice (21) et pourvue, entre ladite extrémité (41) et le tuyau (5), de logements rainurés (42) dont le diamètre est supérieur au diamètre nominal de la tulipe (4) pour accueillir le joint (3);
- un pousseur (6) mobile par rapport à l'élément guide (2) le long d'un axe longitudinal (24) de l'orifice (21), le mouvement du pousseur (6) étant alterné entre une configuration initiale, dans laquelle le pousseur (6) se trouve à une distance prédéterminée de l'entrée (22) de l'orifice (21) pour permettre le placement du joint (3) en position en face de l'orifice (21), et une configuration finale, correspondant au positionnement correct du joint (3) dans logement rainuré (42), le mouvement du pousseur (6) passant, de plus, au moins au travers d'une première configuration intermédiaire, dans laquelle le pousseur pousse frontalement le joint (3) dans l'orifice (21), et au moins par une seconde configuration intermédiaire successive à la première, dans laquelle le pousseur (6) positionne le joint (3) en correspondance de la sortie (23) de l'orifice (21), l'élément guide (2) et le pousseur (6) coopérant pour réduire le diamètre du joint (3) au diamètre nominal de la tulipe (4);
- des moyens pour mettre en mouvement le pousseur (6) relatif à l'élément guide (2);
- une station d'alimentation (7) pour placer le joint (3) coaxialement en face de l'orifice (21), et des moyens pour maintenir le joint (3) en position;
- un tampon (8) dont le diamètre correspond au diamètre nominal de la tulipe (4), pouvant être placé coaxialement à la tulipe (4) entre le logement rainuré (42) et le tuyau (5) lorsque le pousseur (6) est dans sa configuration finale, pour prévenir l'expulsion du joint (3) de son logement rainuré (42) dans la direction du tuyau (5) de part le retour élastique du joint (3) lui-même;
**caractérisé en ce que**:
- le pousseur (6) comprend au moins une partie externe (9) et une partie interne (10) pouvant coulisser de manière guidée l'une par rapport à l'autre le long de l'axe longitudinal (24) de l'orifice (21) de l'élément guide (2), la partie interne (10) ayant une section transversale dont le diamètre correspond au diamètre nominal de la tulipe (4) et étant coaxiale à l'orifice (21);
- la partie externe (9) du pousseur (6) présente frontalement une pluralité de dents (90) avec une géométrie fixe définissant une surface frontale d'arrêt (91) pour le joint (3), lesdites dents (90) étant étirées vers l'orifice (21) de l'élément guide (2), distribuées homogènement autour de la partie interne (10) du pousseur (6), s'étendant de la surface latérale (11) de ladite partie interne (10) au moins à une distance de l'axe longitudinal (24) de l'orifice (21) correspondant au diamètre du joint (3) à l'état non déformé, les dents (90) pouvant également être insérées dans des logements (25) correspondants obtenus,dans l'élément guide (2) le long des directrices de l'orifice (21), les logements (25) étant étendus longitudinalement pour toute la section longitudinale en tronc de cône de l'orifice (21) et transversalement au moins partiellement dans l'élément guide (2) à l'extérieur de l'orifice (21), le pousseur (6) passant de la configuration initiale à la seconde configuration intermédiaire au moyen du mouvement de la partie externe et interne (9, 10) et au moyen de la pénétration de la partie externe (9) du pousseur (6) dans l'élément guide (2) grâce au libre transit des dents (90) dans les logements (25), l'élément guide (2) et la partie externe (9) coopérant dans la réduction du diamètre du joint (3) jusqu'au diamètre nominal de la tulipe (4);
- la partie interne (10) du pousseur (6) présente une extrémité antérieure (12) d'arrêt frontal du joint (3) dont le diamètre correspond au diamètre nominal de la tulipe (4), et est mobile alternativement, par rapport à la partie externe (9) du pousseur (6), au moins d'une première position dans laquelle l'extrémité antérieure d'arrêt (12) est alignée avec la surface frontale d'arrêt (91) définie par les dents (90), à une seconde position, correspondant à la configuration finale du pousseur (6), dans laquelle l'extrémité antérieure d'arrêt (12) est avancée par rapport à la surface frontale d'arrêt (91) et substantiellement adjacente au logement rainuré (42), pour permettre sans empêchement la réduction du diamètre du joint (3) jusqu'au diamètre nominal de la tulipe (4) et l'arrêt frontal du joint (3) sur l'extrémité antérieure d'arrêt (12) en correspondance de la sortie (23) de l'orifice (21), et pour permettre le positionnement correct du joint (3) dans le logement rainuré (42);
- le tampon (8) est rigidement coaxialement relié à la partie interne (10) du pousseur (6) et présente un premier côté (80) orienté vers la partie interne (10) et situé à une distance de l'extrémité antérieure d'arrêt (12) correspondant au moins à la longueur du logement rainuré (42), pour permettre le positionnement du tampon (8) entre le logement rainuré (42) et le tuyau (5) lorsque le pousseur (6) est dans sa configuration finale.

2. Un dispositif selon la revendication 1, **caractérisé en ce que** les logements (25) obtenus dans l'élément guide (2) sont transversaux à l'axe longitudinal (24) de l'orifice (21).

3. Un dispositif selon la revendication 1 ou 2, **caractérisé en ce que** l'élément guide (2) comprend une saillie (26) de la sortie (23) de l'orifice (21) vers la tulipe (4), ladite saillie (26) présentant une extension (27) de l'orifice (21) coaxial à ce dernier et ayant une section cylindrique longitudinale dont le diamètre correspond au diamètre nominal de la tulipe (4), pour favoriser le retour de toutes les parties du joint (3) à l'intérieur de la dimension de la section transversale de la tulipe (4) et homogénéiser l'état de déformation du joint (3).

4. Un dispositif selon la revendication 3, **caractérisé en ce que** la partie interne (10) du pousseur (6) comprend une rainure circonférentielle (13) située à une distance prédéterminée de l'extrémité antérieure d'arrêt (12) et pouvant contenir un lubrifiant et loger un anneau en feutre (14), pour le nettoyage et la lubrification des parois (28) de l'extension (27) de l'orifice (21) pendant le mouvement de la partie interne (10) du pousseur (6) dans l'élément guide (2).

5. Un dispositif selon n'importe laquelle des revendications 1 à 4, **caractérisé en ce que**, dans la configuration initiale du mouvement du pousseur (6), l'extrémité antérieure (12) de la partie intérieure (10) du pousseur (6) est alignée avec la surface d'arrêt (91) définie par les dents (90) de la partie externe (9).

6. Un dispositif selon n'importe laquelle des revendications 1 à 4, **caractérisé en ce que**, dans la configuration initiale du mouvement du pousseur (6), un second côté (81) du tampon (8) opposé au premier côté (80) est aligné avec la surface d'arrêt (91) définie par les dents (90) de la partie externe (9).

7. Un dispositif selon la revendication 5, **caractérisé en ce que** les moyens pour mettre en mouvement le pousseur (6) par rapport à l'élément guide (2) comprennent au moins un premier actionneur (15) pour le mouvement de la partie externe (9) du pousseur (6), et au moins un second actionneur (16) pour le mouvement de la partie interne (10) du pousseur (6), ledit premier et second actionneur (15, 16) étant mutuellement indépendants.

8. Un dispositif selon la revendication 6, **caractérisé en ce que** les moyens de mise en mouvement du pousseur (6) par rapport à l'élément guide (2) comprend:
- au moins une came oscillante (30);
- au moins une première bielle (31) ayant sa propre tête associée à la came (30) au moyen d'une premiêre charnière (32) et son propre pied fixé à la partie interne (10) du pousseur (6);
- au moins une seconde bielle (33) ayant sa tête associée à la came (30) au moyen d'une seconde charnière (34) avec son pied associé à la partie externe (9) du pousseur (6) au moyen d'une troisième charnière (35);
la première et la seconde charnière (32, 34) étant rigidement distancées l'une de l'autre de manière fixe, la troisième charnière (35) étant mobile dans une fente (36) obtenue sur la partie externe (9) du pousseur (6), pour synchroniser le mouvement relatif de la partie interne (10) et de la partie externe (9), la configuration initiale du mouvement du pousseur (6) correspondant à position en butée de départ (37) de la troisième charnière (35) dans la fente (36), le pousseur (6) passant, pendant un segment initial de la course du mouvement oscillant de la came (30) depuis ladite configuration initiale à la seconde configuration intermédiaire au travers d'une première succession de configurations transitoires dans lesquelles:
initialement, la troisième charnière (35) de la seconde bielle (33) se déplace librement à l'intérieur de la fente (6) en maintenant immobile la partie externe (9) par rapport à l'élément guide (2);
simultanément, la première bielle (31) pousse la partie interne (10) vers l'élément guide (2) jusqu'à ce que, lorsque la troisième charnière (35) de la seconde bielle (33) atteint une position de fin de course (38) dans la fente (36), le tampon (8) se déplace au-delà du joint (3) et l'extrémité antérieure (12) de la partie interne (10) s'aligne avec la surface d'arrêt (91) définie par les dents (90) de la partie externe (9); successivement, la première et la seconde bielle (31, 33) pousse simultanément et harmonieusement la partie interne (10) et la partie externe (9) vers l'élément guide (2), la surface d'arrêt (91) arrêtant frontalement et plaçant le joint (3) en correspondance de la sortie (23) de l'orifice (21), la seconde bielle (33) atteignant sa fin de course de poussée sur la partie externe (9) du pousseur (6); le pousseur (6) passant, de plus, pendant un segment final de la course du mouvement oscillant de la came (30), de ladite seconde configuration intermédiaire à la configuration finale au travers d'une succession de configurations transitoires dans lesquelles: 1a troisième charnière (35) de la seconde bielle (33) se déplace initialement librement vers l'arriére à l'intérieur de la fente (6) en maintenant la partie externe (9) immobile par rapport à l'élément guide (2); simultanément, la première bielle (31) pousse la partie interne (10) vers le logement rainuré (42) jusqu'à ce qu'il place le joint (3) dans le logement rainuré (42); le pousseur (6) passant, de plus, de la configuration finale à la configuration initiale pendant le retour du mouvement oscillant de la came (30).

9. Un dispositif selon la revendication 8, **caractérisé en ce que** l'oscillation de la came oscillante (30) est obtenue au moyen d'au moins un actionneur (39) à simple poussée opérativement associé à des moyens élastiques de retour (40).

10. Un dispositif selon n'importe laquelle des revendications précédentes, **caractérisé en ce que** les moyens pour maintenir en position le joint (3) frontalement et coaxialement à l'orifice (21) comprennent au moins deux barres (18) parallèles entre elles et à l'axe longitudinal de l'orifice (21), disposées en correspondance d'un bord (29) de l'entrée (22) de l'orifice (21), rigidement reliées à l'élément guide (2) et pouvant être insérées dans des logements axiaux (19) appropriés obtenus sur le pousseur (6) de manière à ne pas obstacler la pénétration de la partie externe (9) du pousseur (6) dans l'élément guide (2).

11. Un dispositif selon la revendication 10, **caractérisé en ce que** les barres (18) présentent des rainures conformées (20) pour favoriser le logement stable du joint (3) frontalement et coaxialement à l'orifice (21).

12. Un dispositif selon n'importe laquelle des revendications précédentes, **caractérisé en ce qu'**au moins la partie externe (9) du pousseur (6) et l'élément guide (2) sont réalisés en un matériau plastique autolubrifiant.
